# EUROPEAN PATENT APPLICATION

(11) **EP 4 525 514 A1**
(43) Date of publication of application: **19.03.2025**
(21) Application number: 22941624.3
(22) Date of filing: 10.05.2022
(51) Int. Cl.: H04W 28/24

(54) **TERMINAL, RADIO COMMUNICATION METHOD, AND BASE STATION**

(71) Applicant: NTT DOCOMO, INC., Tokyo 100-6150 (JP)
(72) Inventor: ECHIGO, Haruhi, Tokyo 100-6150 (JP); HARADA, Hiroki, Tokyo 100-6150 (JP)
(74) Representative: Hoffmann Eitle
(86) International application number: PCT/JP2022/019870
(87) International publication number: WO 2023/218543

(57) **Abstract**

A terminal according to one aspect of the present disclosure includes a transmitting section that transmits information related to an identifier (ID) of a feasible artificial intelligence (AI) model, and a control section that compiles an AI model corresponding to the ID of the feasible AI model. According to one aspect of the present disclosure, it is possible to implement preferable overhead reduction / channel estimation / resource use.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication technologies, it is studied to utilize the artificial intelligence (AI) technology, such as machine learning (ML), for control, management, and the like of networks/devices.

It is preferable that data / AI models are treated as proprietary assets. For example, creating a highly accurate AI model requires enormous costs/time, and thus leakage of the contents of an AI model created by a certain company to another company leads to a significant disadvantage. Hence, it is studied to disable use (or inference) of part of AI model-related information for terminals (user terminals, User Equipments (UEs)) / base stations provided by different vendors.

An identifier (ID)-based model approach can be one of the methods for managing an AI model in such a scenario. For example, a UE / base station does not recognize details of the AI model, but can recognize only part of information on the AI model (for example, which ML model is used in the UE for what purpose) for AI model management.

However, progress has not been made on a study of details of control, such as how the UE / base station recognizes the model and notifies information related to the model. Unless this control is appropriately defined, appropriate overhead reduction / highly accurate channel estimation / highly efficient resource use cannot be achieved, which may suppress improvement of communication throughput / communication quality.

Thus, an object of the present disclosure is to provide a terminal, a radio communication method, and a base station that can implement preferable overhead reduction / channel estimation / resource use.

### Solution to Problem

A terminal according to one aspect of the present disclosure includes a transmitting section that transmits information related to an identifier (ID) of a feasible artificial intelligence (AI) model, and a control section that compiles an AI model corresponding to the ID of the feasible AI model.

### Advantageous Effects of Invention

According to one aspect of the present disclosure, it is possible to implement preferable overhead reduction / channel estimation / resource use.

### Brief Description of Drawings

[FIG. 1] FIG. 1 is a diagram to illustrate an example of a framework for management of an AI model.
[FIG. 2] FIG. 2 is a diagram to illustrate an example of indication of an AI model.
[FIG. 3] FIG. 3 is a diagram to illustrate an example of an AI model.
[FIG. 4] FIG. 4 is a diagram to illustrate an example of an enquiry about a feasible Al model and a report in a first embodiment.
[FIG. 5] FIG. 5 is a diagram to illustrate an example of an enquiry about a feasible AI model and a report in a variation of the first embodiment.
[FIG. 6] FIG. 6 is a diagram to illustrate an example of a report of characteristic information in a second variation of the first embodiment.
[FIG. 7] FIG. 7 is a diagram to illustrate an example of compilation of an AI model in a second embodiment.
[FIG. 8] FIG. 8 is a diagram to illustrate an example of compilation of an AI model in Embodiment 3.1.
[FIG. 9] FIG. 9 is a diagram to illustrate an example of compilation of an AI model in Embodiment 3.2.
[FIG. 10] FIG. 10 is a diagram to illustrate an example of compilation of an AI model in Embodiment 3.3.
[FIG. 11] FIG. 11 is a diagram to illustrate an example of compilation of an AI model in Embodiment 3.3.
[FIG. 12] FIG. 12 is a diagram to illustrate an example of allocation of a compiled model ID in Embodiment 3.4.
[FIG. 13] FIGS. 13A and 13B are diagrams to illustrate examples of an ID corresponding to an AI model set.
[FIG. 14] FIG. 14 is a diagram to illustrate an example in which an AI model used in a UE and an AI model used in a BS are used as an AI model set.
[FIG. 15] FIGS. 15A and 15B are diagrams to illustrate examples of evaluation of performance of the model in FIG. 14.
[FIG. 16] FIG. 16 is a diagram to illustrate an example of a schematic structure of a radio communication system according to one embodiment.
[FIG. 17] FIG. 17 is a diagram to illustrate an example of a structure of a base station according to one embodiment.
[FIG. 18] FIG. 18 is a diagram to illustrate an example of a structure of a user terminal according to one embodiment.
[FIG. 19] FIG. 19 is a diagram to illustrate an example of a hardware structure of the base station and the user terminal according to one embodiment.
[FIG. 20] FIG. 20 is a diagram to illustrate an example of a vehicle according to one embodiment.

### Description of Embodiments

### (Application of Artificial Intelligence (AI) Technology to Radio Communication)

For future radio communication technologies, it is studied to utilize the AI technology, such as machine learning (ML), for control, management, and the like of networks/devices.

For example, for future radio communication technologies, it is studied to utilize the AI technology to enhance channel state information (Channel State Information Reference Signal (CSI)) feedback (for example, overhead reduction, improvement of accuracy, prediction), to improve beam management (for example, improvement of accuracy, prediction in a time/spatial domain), to improve location measurement (for example, improvement of location estimation/prediction), and the like.

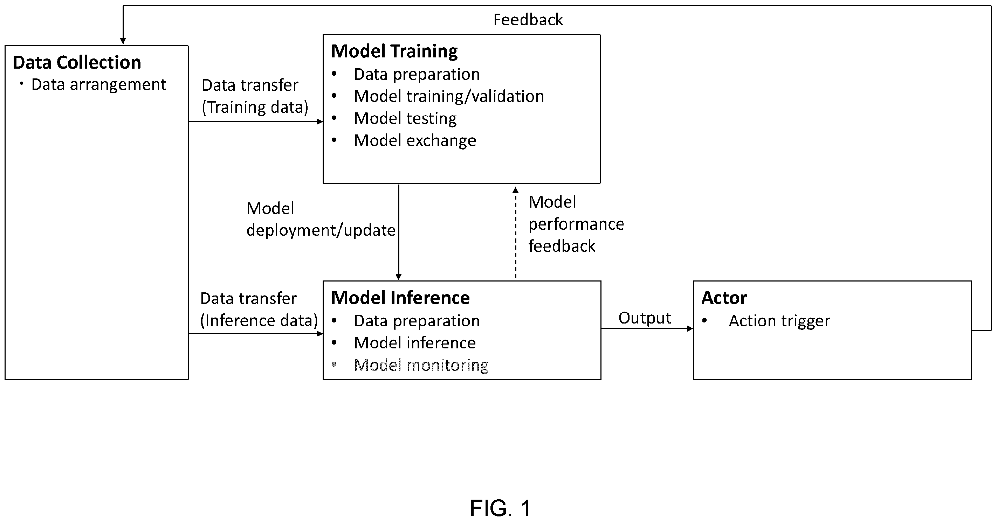

FIG. 1 is a diagram to illustrate an example of a framework for management of an AI model. In the present example, each stage associated with the AI model is illustrated as a block. The present example is also described as lifecycle management of the AI model.

A data collection stage corresponds to a stage of collection of data for generation/update of the AI model. The data collection stage may include data arrangement (for example, determination of which data is transferred for model training / model inference), data transfer (for example, transfer of data to an entity (for example, a UE, a gNB) that performs model training / model inference), and the like.

In a model training stage, model training is performed based on the data (training data) transferred from the collection stage. This stage may include data preparation (for example, pre-processing of data, cleaning, formatting, conversion, and the like), model training/validation, model testing (for example, verification that a trained model satisfies a performance threshold value), model exchange (for example, transfer of a model for distributed learning), model deployment/update (model deployment/update for an entity that performs model inference), and the like.

In a model inference stage, model inference is performed based on the data (inference data) transferred from the collection stage. This stage may include data preparation (for example, pre-processing of data, cleaning, formatting, conversion, and the like), model inference, model monitoring (for example, monitoring of performance of model inference), model performance feedback (feedback of model performance to an entity that performs model training), output (provision of model output to an actor), and the like.

An actor stage may include an action trigger (for example, determination of whether to trigger an action on another entity), feedback (for example, feedback of training data / inference data / information necessary for performance feedback), and the like.

Note that, for example, model training for mobility optimization may be performed, for example, in maintenance operation management (Operation, Administration and Maintenance (Management) (OAM)) in a network (NW) / gNodeB (gNB). The former has advantages in interoperability, large capacity storage, operator manageability, and model flexibility (such as feature engineering). The latter has an advantage of eliminating the need for latency of model update, data exchange for model expansion, and the like. The model inference may be performed, for example, in the gNB.

The entity that performs the training/inference may vary depending on a use case.

For example, for AI-assisted beam management based on a measurement report, OAM/gNB may perform model training and the gNB may perform model inference.

For AI-assisted UE-assisted positioning, a Location Management Function (LMF) may perform model training and the LMF may perform model inference.

For CSI feedback / channel estimation using an autoencoder, OAM/gNB/UE may perform model training and the gNB/UE may perform model inference (jointly).

For AI-assisted beam management or AI-assisted UE-based positioning based on beam measurement, OAM/gNB/UE may perform model training and the UE may perform model inference.

Incidentally, it is preferable that data / AI models are treated as proprietary assets. For example, creating a highly accurate AI model requires enormous costs/time, and thus leakage of the contents of an AI model created by a certain company to another company leads to a significant disadvantage. Hence, it is studied to disable use (or inference) of part of AI model-related information for UEs / gNBs provided by different vendors.

An identifier (ID)-based model approach can be one of the methods for managing an AI model in such a scenario. For example, a NW / gNB does not recognize details of the AI model, but can recognize only part of information on the AI model (for example, which ML model is used in the UE for what purpose) for AI model management.

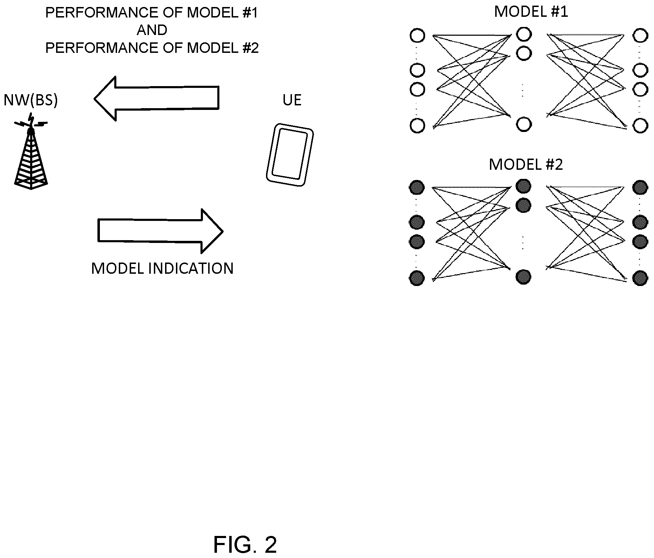

FIG. 2 is a diagram to illustrate an example of indication of an AI model. In the present example, the UE and the NW (for example, a base station (BS)) can recognize models #1 and #2 (may not fully understand details of the models). For example, the UE may report performance of model #1 and performance of model #2 to the NW, and the NW may indicate, for the UE, an AI model to be used.

However, progress has not been made on a study of details of control, such as how the UE / BS recognizes the model and notifies information related to the model. Unless this control is appropriately defined, appropriate overhead reduction / highly accurate channel estimation / highly efficient resource use cannot be achieved, which may suppress improvement of communication throughput / communication quality.

Hence, the inventors of the present invention came up with the idea of a method for preferably controlling ID-based model management. Note that, each of the embodiments of the present disclosure may be applied when AI/prediction is not used.

In an embodiment of the present disclosure, a terminal (user terminal, User Equipment (UE)) / base station (BS) performs training of an ML model in a training mode and performs the ML model in an inference mode (also referred to as an inference mode and the like). In the inference mode, validation of the accuracy of the ML model trained in the training mode (trained ML model) may be performed.

In the present disclosure, the UE/BS may input channel state information, a reference signal measurement value, and the like to the ML model and output highly accurate channel state information / measured value / beam selection/position, future channel state information / radio link quality, and the like.

Note that, in the present disclosure, AI may be interpreted as an object (also referred to as a target, data, function, program, and the like) having (implementing) at least one of the following features:
- estimation based on observed or collected information,
- selection based on observed or collected information, and
- prediction based on observed or collected information.

In the present disclosure, the object may be, for example, an apparatus, a device, or the like, such as a terminal or a base station. In the present disclosure, the object may correspond to a program/model/entity that operates in the apparatus.

Note that, in the present disclosure, the ML model may be interpreted as an object having (implementing) at least one of the following features:
- feeding information to thereby generate an estimated value,
- feeding information to thereby predict an estimated value,
- feeding information to thereby find a feature, and
- feeding information to thereby select an operation.

In the present disclosure, the ML model, a model, an AI model, predictive analytics, a predictive analytics model, and the like may be interchangeably interpreted. The ML model may be derived by using at least one of regression analysis (for example, linear regression analysis, multiple regression analysis, logistic regression analysis), support vector machine, random forest, neural network, deep learning, and the like. In the present disclosure, a model may be interpreted as at least one of an encoder, a decoder, a tool, and the like.

The ML model outputs at least one information among an estimated value, a predicted value, a selected operation, classification, and the like, based on the input information.

Examples of the ML model may include supervised learning, unsupervised learning, and reinforcement learning. The supervised learning may be used to perform learning of a general rule for mapping an input to an output. The unsupervised learning may be used to perform learning of characteristics of data. The reinforcement learning may be used to perform learning of operation for maximizing a goal.

In the present disclosure, "generate," "compute," "derive," and the like may be interchangeably interpreted. In the present disclosure, "perform," "manage," "operate," "carry out," and the like may be interchangeably interpreted. In the present disclosure, "train," "learn," "update," "re-train," and the like may be interchangeably interpreted. In the present disclosure, inference, after-training, substantial use, actual use, and the like may be interchangeably interpreted. A signal may be interpreted as a signal/channel and vice versa.

In the present disclosure, the training mode may correspond to a mode in which a UE/BS transmits/receives a signal for an ML model (in other words, an operation mode in a training period). In the present disclosure, the inference mode may correspond to a mode in which a UE/BS performs an ML model (for example, performs a trained ML model to predict an output) (in other words, an operation mode in an inference period).

In the present disclosure, the training mode may mean a mode in which, as a specific signal to be transmitted in the inference mode, the specific signal with high overhead (for example, a large resource amount) is transmitted.

In the present disclosure, the training mode may mean a mode in which a first configuration (for example, a first DMRS configuration, a first CSI-RS configuration, a first CSI report configuration) is referred to. In the present disclosure, the inference mode may mean a mode in which a second configuration (for example, a second DMRS configuration, a second CSI-RS configuration, a second CSI report configuration), which is different from the first configuration, is referred to. In the first configuration, a larger number of at least one of time resources, frequency resources, coding resources, ports (antenna ports) related to measurement than those in the second configuration may be configured. Note that the CSI report configuration may include a configuration related to an autoencoder, for example.

Embodiments according to the present disclosure will be described in detail with reference to the drawings as follows. The radio communication methods according to respective embodiments may each be employed individually, or may be employed in combination.

In the following embodiments, description will be given of an ML model related to UE-BS communication, and hence related subjects are a UE and a BS. However, application of each of the embodiments of the present disclosure is not limited to this. For example, for communication between different subjects (for example UE-UE communication), a UE and a BS in the embodiment below may be interpreted as a first UE and a second UE, respectively. In other words, a UE, a BS, and the like in the present disclosure may all be interpreted as any UE/BS.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a CSI-RS, a non-zero power (NZP) CSI-RS, a zero power (ZP) CSI-RS, and CSI interference measurement (CSI-IM) may be interchangeably interpreted. The CSI-RS may include another reference signal.

In the present disclosure, a measured/reported RS may mean an RS measured/reported for a CSI report.

In the present disclosure, timing, a time point, a time, a slot, a sub-slot, a symbol, a subframe, and the like may be interchangeably interpreted.

In the present disclosure, a direction, an axis, a dimension, a domain, polarization, a polarization element, and the like may be interchangeably interpreted.

In the present disclosure, an RS may be, for example, a CSI-RS, an SS/PBCH block (SS block (SSB)), or the like. The RS index may be a CSI-RS resource indicator (CRI), an SS/PBCH block resource indicator (SS/PBCH Block Indicator (SSBRI), or the like.

In the present disclosure, estimation, prediction, and inference may be interchangeably interpreted. In the present disclosure, "estimate," "predict," and "infer" may be interchangeably interpreted.

In the present disclosure, an autoencoder, an encoder, a decoder, and the like may be interpreted as at least one of a model, an ML model, a neural network model, an AI model, an AI algorithm, and the like. The autoencoder may be interpreted as any autoencoder, such as a stacked autoencoder and a convolutional autoencoder, and vice versa. An encoder/decoder in the present disclosure may employ a model, such as Residual Network (ResNet), DenseNet, and RefineNet.

In the present disclosure, an encoder, encoding, modification/change/control using an encoder, and the like may be interchangeably interpreted. In the present disclosure, a decoder, decoding, modification/change/control using a decoder, and the like may be interchangeably interpreted.

In the present disclosure, the channel measurement/estimation may be performed by using at least one of a channel state information reference signal (CSI-RS), a synchronization signal (SS), a synchronization signal / broadcast channel (Synchronization Signal / Physical Broadcast Channel (SS/PBCH)) block, a demodulation reference signal (DMRS), a reference signal for measurement (Sounding Reference Signal (SRS)), and the like, for example.

In the present disclosure, the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), information related to a channel matrix, information related to a precoding matrix, and the like.

In the present disclosure, UCI, a CSI report, CSI feedback, feedback information, a feedback bit, and the like may be interchangeably interpreted. In the present disclosure, a bit, a bit string, a bit sequence, a sequence, a value, information, a value obtained from a bit, information obtained from a bit, and the like may be interchangeably interpreted.

In the present disclosure, a layer (for an encoder) may be interpreted as a layer used in an AI model (an input layer, an intermediate layer, and the like), and vice versa. The layer in the present disclosure may correspond to at least one of an input layer, an intermediate layer, an output layer, a batch normalization layer, a convolution layer, an activation layer, a dense layer, a normalization layer, a pooling layer, an attention layer, a dropout layer, a fully coupling layer, and the like.

### (Radio Communication Method)

In the present disclosure, AI model information may mean information including at least one of the following:
- Information on AI model input/output
- Information on pre-processing/post-processing for AI model input/output
- Information on AI model parameter
- Training information for AI model
- Inference information for AIl model
- Performance information related to AI model

Here, the information on the AI model input/output may include information related to at least one of the following:
- Contents of input/output data (for example, RSRP, SINR, and amplitude/phase information, angle of arrival (AoA)-related information, angle of departure (AoD)-related information, and location information in channel matrix (or precoding matrix))
- Auxiliary information of data (which may be referred to as meta information)
- Type of input/output data (for example, immutable value, floating point number)
- Quantization interval of input/output data (quantization step size) (for example, 1 dBm for L1-RSRP)
- Possible range of input/output data (for example, [0, 1])

Note that, in the present disclosure, the AoA-related information may include information related to at least one of an azimuth angle of arrival and a zenith angle of arrival (ZoA). The AoD-related information may include, for example, information related to at least one of an azimuth angle of departure and a zenith angle of departure (ZoD).

In the present disclosure, the location information may be location information related to the UE/NW. The location information may include at least one of information obtained by using a positioning system (for example, a satellite positioning system (Global Navigation Satellite System (GNSS), Global Positioning System (GPS), or the like)) (for example, latitude, longitude, altitude), information on a base station adjacent to the UE (or in service) (for example, a base station / cell identifier (ID), a BS-to-UE distance, a direction/angle of the BS (UE) as viewed from the UE (BS), coordinates of the BS (UE) as viewed from the UE (BS) (for example, X/Y/Z axis coordinates), and the like), a specific address of the UE (for example, an Internet Protocol (IP) address), and the like. The location information of the UE is not limited to information based on a location of the BS, but may be information based on a specific point.

The location information may include information related to implementation of the UE itself (for example, a location (position) / direction of an antenna, a location/direction of an antenna panel, the number of antennas, the number of antenna panels, and the like).

The location information may include mobility information. The mobility information may include information indicating a mobility type and information indicating at least one of a moving speed of the UE, an acceleration of the UE, a moving direction of the UE, and the like.

Here, the mobility type may correspond to at least one of a fixed location UE, a movable/moving UE, a no mobility UE, a low mobility UE, a middle mobility UE, a high mobility UE, a cell-edge UE, a not-cell-edge UE, and the like.

In the present disclosure, environment information (for data) may be information related to the environment in which the data is acquired/used, and may include, for example, frequency information (such as a band ID), environment type information (information indicating at least one of indoor, outdoor, Urban Macro (UMa), Urban Micro (Umi), and the like).

In the present disclosure, the meta information may mean, for example, information related to input/output information suitable for an AI model, information related to acquired/acquirable data, and the like. Specifically, the meta information may include information related to a beam of an RS (for example, a CSI-RS/SRS/SSB or the like) (for example, an angle at which each beam is directed, a 3dB-beam width, a shape of a directed beam, the number of beams), antenna layout information on the gNB/UE, frequency information, environment information, a meta information ID, and the like. Note that the meta information may be used as AI model input/output.

The information on the pre-processing/post-processing for AI model input/output may include information related to at least one of the following:
- Whether to apply normalization (for example, Z-score normalization (standardization), min-max normalization)
- Parameter for normalization (for example, mean/variance for Z-score normalization, minimum value / maximum value for min-max normalization)
- Whether to apply specific number conversion method (for example, one hot encoding, label encoding, and the like)
- Rule of selection of whether information is used as training data

For example, normalized input information x_{new} obtained by performing, as the pre-processing, Z-score normalization (x_{new} = (x-µ) / σ, where µ is the mean of x and σ is the standard deviation) on input information x may be input to an AI model, and final output y may be obtained by performing the post-processing on output yₒᵤₜ from the AI model.

The information on the AI model parameter may include information related to at least one of the following:
- Weight (for example, neuron factor (coupling factor)) information in AI model
- Structure of AI model
- Type of AI model as model component (for example, Residual Network (ResNet), DenseNet, RefineNet, Transformer model, CRBlock, recurrent neural network (RNN), long short-term memory (LSTM), and gated recurrent unit (GRU))
- Function of AI model as model component (for example, decoder, encoder)

Note that the weight information in the AI model may include information related to at least one of the following:
- Bit width (size) of weight information
- Quantization interval of weight information
- Granularity of weight information
- Possible range of weight information
- Weight parameter in AI model
- Information on difference from AI model before update (in case where AI model is updated)
- Weight initialization method (for example, zero initialization, random initialization (based on normal distribution / uniform distribution / truncated normal distribution), Xavier initialization (for sigmoid function), He initialization (for rectified linear units (ReLUs)))

The structure of the AI model may include information related to at least one of the following:
- Number of layers
- Type of layer (for example, convolution layer, activation layer, dense layer, normalization layer, pooling layer, attention layer)
- Layer information
- Time sequence-specific parameter (for example, bidirectionality, time step)
- Parameter for training (for example, type of function (L2 regularization, dropout function, or the like), where (for example, after which layer) this function is to be placed)

The layer information may include information related to at least one of the following:
- Number of neurons in each layer
- Kernel size
- Stride for pooling layer / convolution layer
- Pooling method (MaxPooling, AveragePooling, or the like)
- Residual block information
- Number of heads
- Normalization method (batch normalization, instance normalization, layer normalization, or the like)
- Activation function (sigmoid, tanh function, ReLU, leaky ReLU information, Maxout, Softmax)

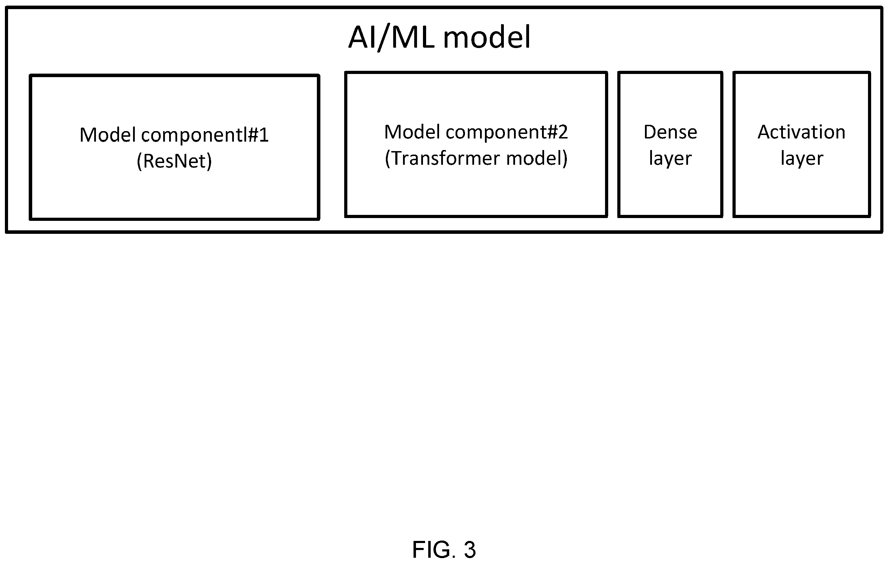

FIG. 3 is a diagram to illustrate an example of the AI model. The present example illustrates the AI model including ResNet as model component #1, a transformer model as model component #2, a dense layer, and a normalization layer. In this manner, a certain AI model may be included as a component of another AI model. Note that FIG. 3 may correspond to the AI model in which processing proceeds from left to right.

The training information for the AI model may include information related to at least one of the following:
- Information for optimization algorithm (for example, type of optimization (stochastic gradient descent (SGD)), AdaGrad, Adam, or the like), optimization parameter (learning rate, momentum information, or the like)
- Loss function information (for example, information related to metrics for loss function (mean absolute error (MAE), mean square error (MSE), cross-entropy loss, NLLLoss, Kullback-Leibler (KL) divergence, or the like)
- Parameter to be frozen for training (for example, layer, weight)
- Parameter to be updated (for example, layer, weight)
- Parameter to be initial parameter for training (to be used as initial parameter) (for example, layer, weight)
- AI model training/update method (for example, (recommended) number of epochs, batch size, number of data to be used for training)

The inference information for the AI model may include information related to branch pruning of a decision tree, parameter quantization, an AI model function, and the like. Here, the AI model function may correspond to, for example, at least one of time-domain beam prediction, spatial-domain beam prediction, an autoencoder for CSI feedback, an autoencoder for beam management, and the like.

The autoencoder for CSI feedback may be used as follows:
- The UE transmits, as CSI feedback (CSI report), an encoded bit output by inputting CSI / channel matrix / precoding matrix to an AI model for the encoder.
- The BS reconfigures the CSI / channel matrix / precoding matrix output by inputting the received encoded bit to an AI model for the decoder.

In spatial-domain beam prediction, the UE/BS may input, to the AI model, a measurement result (beam quality, for example, RSRP) based on a sparse (or thick) beam to output dense (or thin) beam quality.

In time-domain beam prediction, the UE/BS may input, to the AI model, a time-series (past, current, or the like) measurement result (beam quality, for example, RSRP) to output future beam quality.

The performance information related to the AI model may include information related to an expected value of a loss function defined for the AI model.

The AI model information in the present disclosure may include information related to a range of application (applicable range) of the AI model. The range of the application may be indicated by a physical cell ID, a serving cell index, or the like. The above-described environment information may include information related to the range of the application.

The AI model information related to a specific AI model may be predefined in a specification, or notified to the UE from a network (NW). The AI model defined in the specification may be referred to as a reference AI model. The AI model information related to the reference AI model may be referred to as reference AI model information.

Note that the AI model information in the present disclosure may include an index for identifying an AI model (which may be referred to as, for example, an AI model index, an AI model ID, a model ID, and so on). The AI model information in the present disclosure may include an AI model index in addition to / instead of the above-described information on the AI model input/output and the like. Association between the AI model index and the AI model information (for example, the information on the AI model input/output) may be predefined in a specification, or notified to the UE from the NW.

The AI model information in the present disclosure may be referred to as AI model relevant information, relevant information simply, and so on. The AI model relevant information may not explicitly include information for identifying an AI model. The AI model relevant information may be, for example, information including only meta information.

### <First Embodiment>

A first embodiment relates to a report of a feasible AI model.

A UE may report (transmit), to a NW, information on a feasible AI model deployed (enabled) by the UE itself / capable of being deployed by the UE itself.

Note that the UE may be provided with AI model information from external apparatus (for example, a data server), and may judge that one or more AI models from among the AI models corresponding to the information are the feasible AI model.

The UE may judge that one or more AI models from among the AI models corresponding to AI model information stored on storage apparatus (for example, memory, storage) included by the UE itself are the feasible AI model.

The feasible AI model information may be at least one of the following:
- IDs of all feasible AI models
- ID of feasible AI model satisfying condition

Note that the ID of the feasible AI model may be associated with AI model information on the feasible AI model. Notifying only the ID can suppress communication overhead for notification of the feasible Al model.

The UE may report the feasible AI model information in response to an enquiry (report request) about the feasibility of a specific AI model, notified from a base station. The condition may be a case that the UE can perform the specific AI model indicated by the report request.

The report request for the feasibility may be a request for a report of all the feasible AI models in the UE. The report request for the feasibility may include information for identifying an AI model (for example, an AI model ID), and may be a request for a report in a case where an AI model identified by the information is feasible in the UE.

The report request for the feasibility may be a UE capability enquiry, and UE capability information including the feasible AI model information may be reported.

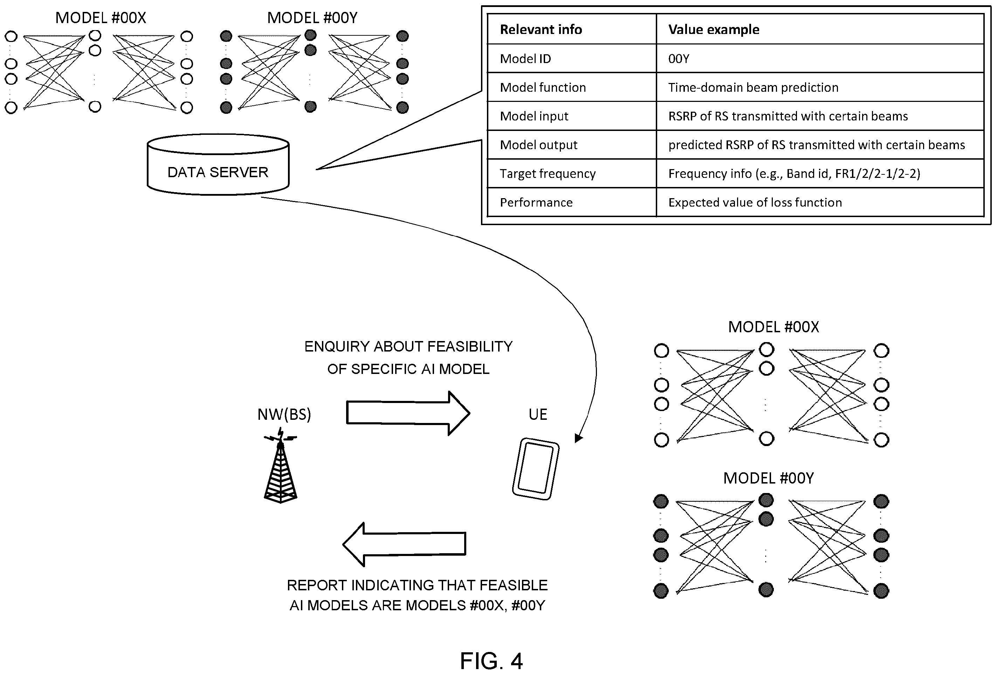

FIG. 4 is a diagram to illustrate an example of the enquiry about the feasible AI model and the report in the first embodiment. In the present example, assume that the UE (/NW) is beforehand notified of at least part of the feasible Al model information from the data server (the same also applies to the following drawings when a particular mention is not made, although the data server and the like are not illustrated).

Note that, for example, information (relevant information) on model #00Y may include at least one of the following:
- Model ID: 00Y
- Model function: time-domain beam prediction
- Model input: (current/past) RSRP of RS transmitted with certain beam
- Model output: predicted RSRP of RS transmitted with certain beam
- Target frequency: frequency information (for example, band ID, FR1/FR2/FR2-1/FR2-2)
- Performance: expected value of loss function

In the present example, the UE receives, from the base station, the report request for the report of all the feasible AI models, and transmits a report indicating that the feasible AI models are models #00X and #00Y (feasible AI model information).

### {Variation of First Embodiment}

The reported feasible AI model information may include not only the above-described ID of the one or more feasible AI models, but also AI model information other than the ID. There can be information depending on the environment, UE configuration, a UE capability, and the like in the AI model information, but it is difficult to support such information by using only IDs (the number of IDs becomes enormous). On the other hand, reporting such information together with the ID enables a flexible report.

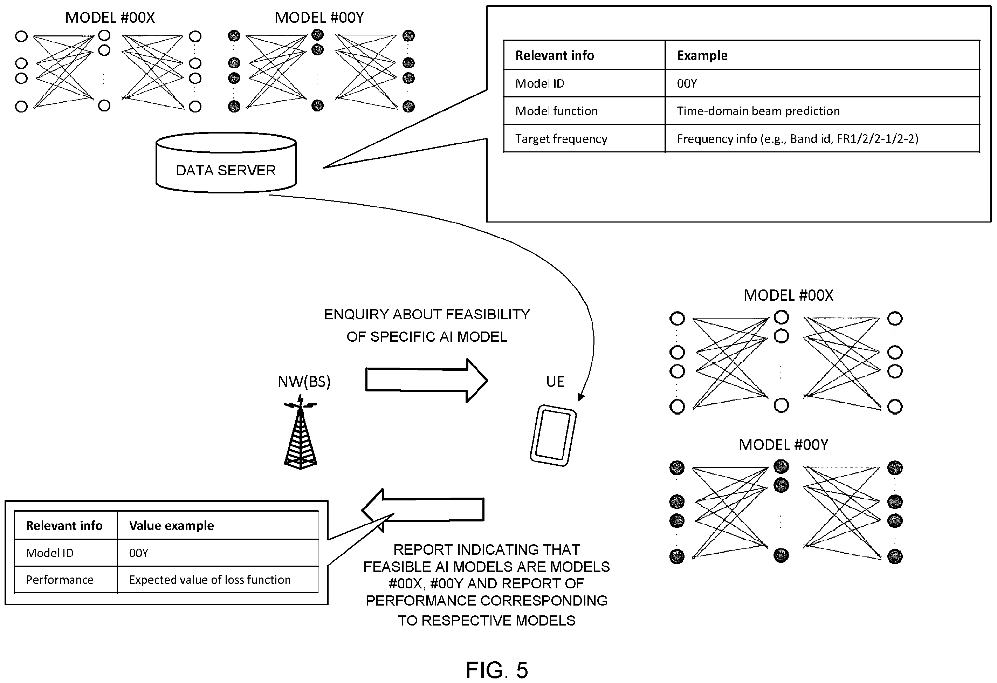

FIG. 5 is a diagram to illustrate an example of the enquiry about the feasible AI model and the report in a variation of the first embodiment. In the present example, unlike the information in FIG. 4, information (relevant information) on model #00Y may not include (may include) the performance information.

In the present example, the UE receives, from the base station, the report request for the report of all the feasible AI models, and transmits, as the feasible AI model information, a report indicating that the feasible AI models are models #00X and #00Y and performance information corresponding to the respective models. For example, as the performance information on model #00Y, (concrete value of) the expected value of the loss function may be reported.

### {Second Variation of First Embodiment}

Instead of or before/when/after reporting the feasible AI model information, the UE may report information related to a characteristic of an AI model capable of being deployed by the UE (for example, which may be referred to as characteristic information). The characteristic information may be UE capability information, and may indicate, for example, at least one of the following:
- Maximum floating point operations (FLOPs (note that "s" is a lowercase letter)) of AI model capable of being deployed by UE (this means an amount of the maximum floating point operations)
- Maximum number of parameters for AI model capable of being deployed by UE
- Minimum granularity of (value indicated by) weight information supported by UE
- Layer/algorithm/function supported by UE

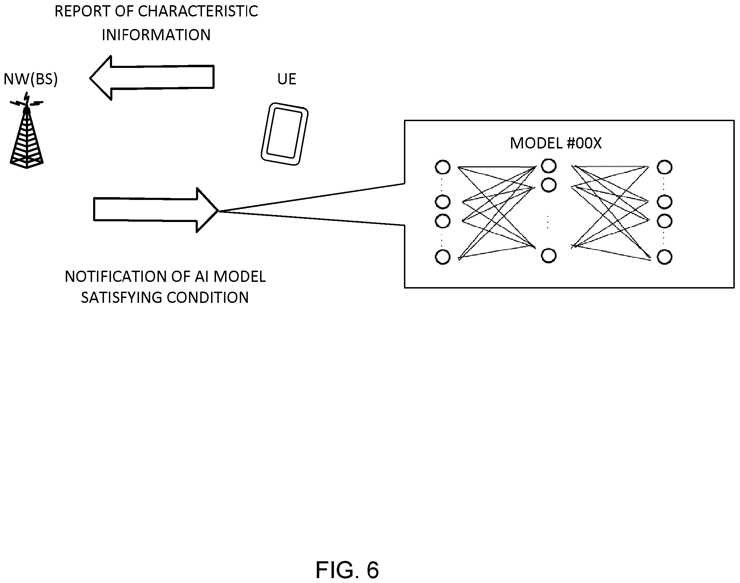

FIG. 6 is a diagram to illustrate an example of the report of the characteristic information in a second variation of the first embodiment. In the present example, the UE reports the characteristic information. The base station may select a specific AI model (in FIG. 6, model #00X) satisfying a condition from among AI models indicated by the characteristic information, and may notify the UE of model #00X. This condition may be, for example, a case that FLOPs are a certain threshold value or less (case that a certain level of performance or higher can be further expected), or the like.

According to the first embodiment described above, it is possible to appropriately judge a feasible AI model.

### <Second Embodiment>

A second embodiment relates to compilation (compiling) of an AI model.

A UE may compile an AI model, based on information received from a base station (also referred to hereinafter as compilation information). The compilation information may include a model ID to be compiled, and the UE may compile an AI model corresponding to the model ID.

Note that, in the present disclosure, "compile" may be interpreted as "configure"/"configured," "activate"/"activated," and so on, and vice versa. In the present disclosure, "compile a certain AI model" may be interpreted as "enable inference using the certain AI model to be applied (to be applicable)," "apply an AI model to be compiled," and so on, and vice versa.

In other words, the UE may judge that inference using the compiled AI model is available, but inference using an uncompiled AI model (for example, an AI model that is a feasible AI model but whose ID has not been notified by the compilation information) is unavailable.

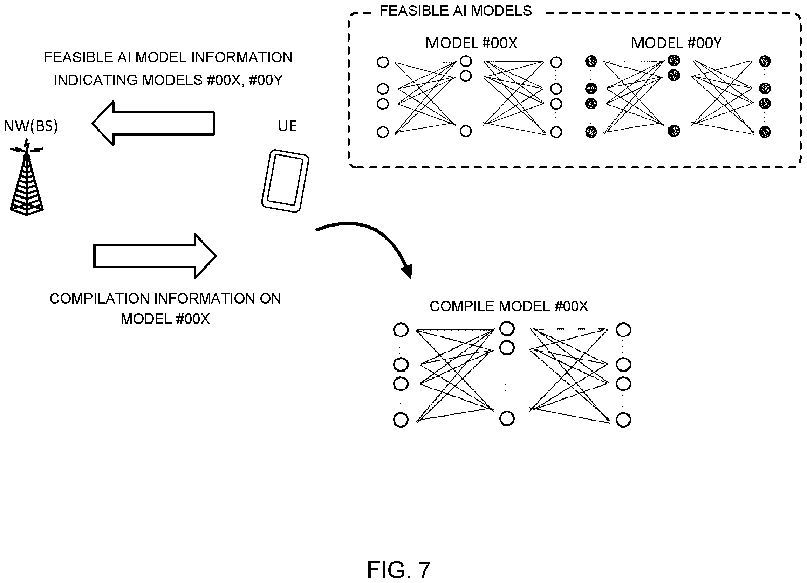

FIG. 7 is a diagram to illustrate an example of the compilation of the AI model in the second embodiment. In the present example, the UE transmits, to the base station, feasible AI model information indicating models #00X and #00Y. The base station selects model #00X from among models #00X and #00Y (for example, based on performance or the like), and transmits compilation information on model #00X to the UE. The UE compiles an AI model of model #00X, based on the compilation information.

Note that, at a timing before any one timing or a plurality of timings of the following, the UE may not expect to apply the AI model compiled based on the compilation information (may judge that the compiled AI model is inapplicable):
- Timing after lapse of certain time since UE received compilation information
- Timing after lapse of certain time since UE reported, to base station, completion of compiling based on compilation information
- Timing after lapse of certain time since (last symbol for) PDCCH reception including DCI format that schedules PUSCH transmission having same Hybrid Automatic Repeat reQuest (HARQ) process number as that of transmission (for example, PUSCH transmission), by UE, of completion of compiling based on compilation information and that has toggled new data indicator field (NDI) field value

Here, the certain time may be expressed with a unit, such as seconds/slots/sub-slots/symbols, and may be, for example, X milliseconds/slots/sub-slots/symbols or the like. The value of X may be notified to the UE, may be a fixed value for a certain band, or may be a fixed value for all the UEs (or a specific UE).

According to the second embodiment described above, it is unnecessary for the UE to always make all the feasible models available for inference, and improvement in conservation / processing speed of an AI model-related storage area can be expected.

### <Third Embodiment>

A third embodiment relates to application of compilation (compiling) of an AI model.

### {Embodiment 3.1}

Embodiment 3.1 corresponds to application of the compilation information described in the second embodiment. A UE may control compilation of one AI model, based on two model IDs included in the compilation information. One of the two model IDs may be referred to as a global model ID, and the other may be referred to as a compiled model ID.

The global model ID may be a unique model ID used in a data server, and may be an ID for indicating a base AI model. The global model ID may be referred to as a global ID, a base model ID, a base ID, and the like.

The compiled model ID may be an ID for indicating the AI model obtained by changing/enhancing/modifying an AI model indicated by the global model ID. The compiled model ID may be referred to as a feasible model ID, a local model ID, a local ID, and the like. The compiled model ID may be defined for each UE, or may be defined for each cell (or for each UE group).

For example, the compiled model may be a model obtained by applying fine tuning, transfer learning, and the like to a global model.

In the fine tuning, an entity that performs training performs training by using a parameter for a trained AI model (for example, the global model) in a source domain as an initial parameter for an AI model (pre-trained AI model) in a target domain, and derives the trained AI model in the target domain. In other words, all the layers of the trained AI model in the source domain may be transferred to all the layers of the AI model in the target domain, and some of these layers may be directly used without being updated (may be fixed (frozen)).

In the transfer learning (which may be referred to as network-based deep transfer learning and so on), the entity that performs the training reuses some trained layers in the source domain (for example, a front layer, a shallow layer) as layers in the target domain. These layers can be used as a characteristic extractor. In other words, only some layers of the trained AI model in the source domain may be transferred to a layer corresponding to the AI model in the target domain, and the layer may be fixed (frozen) or may be fine-tuned. For the remaining layer in the target domain, a corresponding layer may be absent in the source domain and training (or fine tuning) may be newly performed in the target domain.

The UE may expect to compile an AI model only when a compiled model ID is allocated (or notified). The compilation information may correspond to allocation information for allocating the compiled model ID to the global model ID.

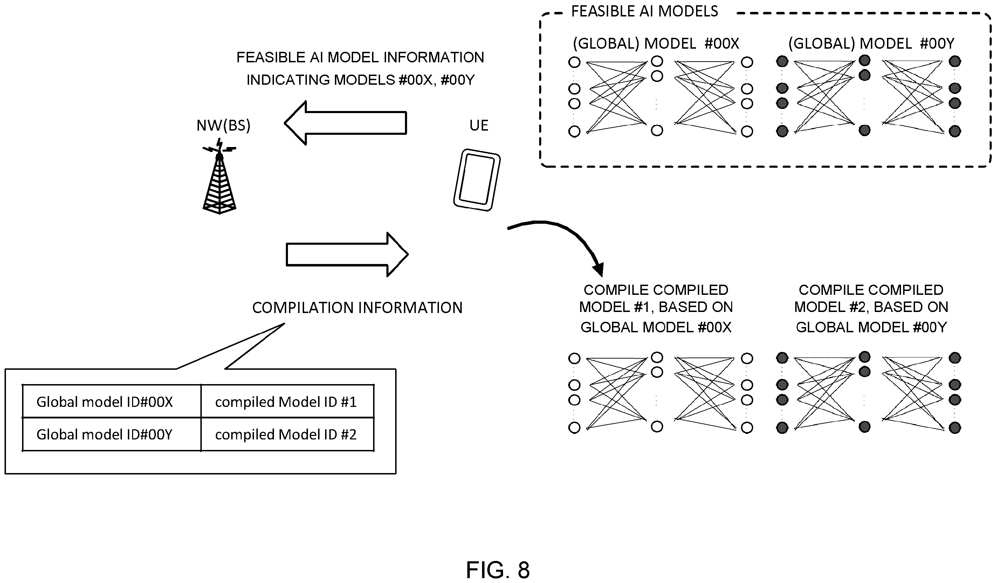

FIG. 8 is a diagram to illustrate an example of the compilation of the AI model in Embodiment 3.1. In the present example, the UE transmits, to a base station, feasible AI model information indicating (global) models #00X and #00Y. The base station determines that a compiled model ID corresponding to model #00X is #1 and a compiled model ID corresponding to model #00Y is #2, and transmits, to the UE, compilation information indicating these IDs. Based on the compilation information, the UE compiles compiled model #1 and compiled model #2, based on model #00X and model #00Y, respectively.

Note that, in the present disclosure, the compiled model may be regarded as a feasible AI model.

### {Embodiment 3.2}

In Embodiment 3.2, the UE may change/enhance/modify a global model for itself to determine (configure) a compiled model even when not being notified of compilation information from the base station. In this case, the UE may transmit, to the base station, information related to a relationship (mapping) between the global model and the compiled model (which may be referred to as mapping information).

The mapping information may include a compiled model ID and a corresponding global model ID for each compiled model. The mapping information may include AI model information other than the IDs, as with the feasible AI model information in the variation of the first embodiment.

The mapping information may not include a global model ID (for example, may include only a compiled model ID / relevant AI model information). For example, in a case of only one global model feasible by the UE, and the like, it is unnecessary to notify the mapping information including a global model ID.

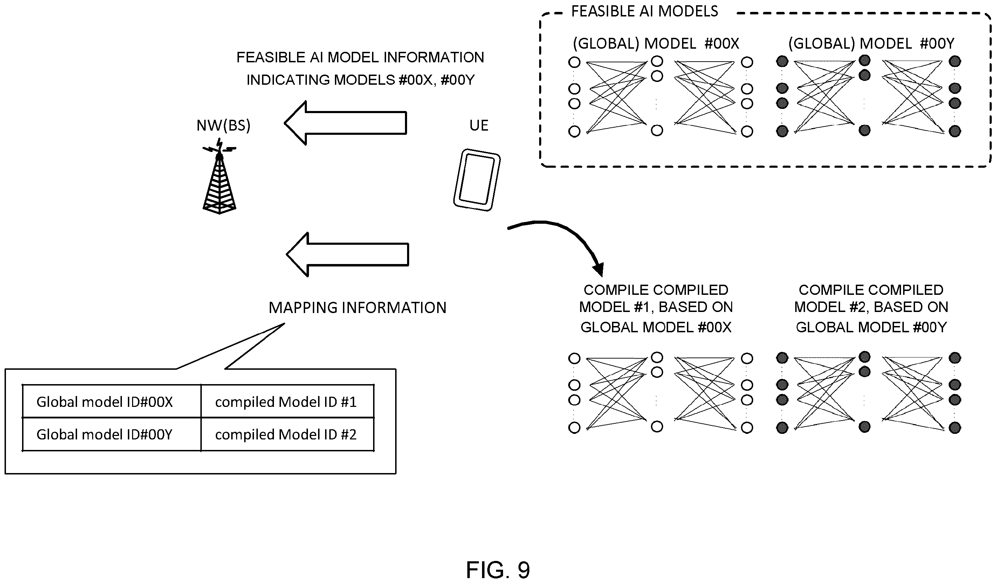

FIG. 9 is a diagram to illustrate an example of the compilation of the AI model in Embodiment 3.2. In the present example, the UE transmits, to the base station, feasible AI model information indicating (global) models #00X and #00Y.

The UE compiles compiled model #1 and compiled model #2, based on model #00X and model #00Y, respectively. The UE transmits, to a NW, mapping information indicating that a compiled model ID corresponding to model #00X is #1 and a compiled model ID corresponding to model #00Y is #2.

Note that, in the present disclosure, it is preferable that a compiled model ID is represented (identified) by using a sequence (character string / number / symbol or the like) shorter than a global model ID. Thus, such a method for identifying a model by using a global model ID and a compiled model ID as that described in Embodiment 3.1/3.2 has an advantage of suppressing overhead for notification of a compiled model ID.

### {Embodiment 3.3}

In Embodiment 3.3, when updating an AI model, the UE may transmit, to the base station, an update request for a compiled model. The update request may be referred to as a model change request (MCR).

The UE may transmit the MCR when a specific condition is satisfied (for example, performance of the AI model is a threshold value or less).

The MCR may mean an additional request for a compiled model, and in this case, the MCR may be referred to as a model addition request (MAR).

The MCR (MAR) may include at least one information of the following:
- Compiled model ID / global model ID related to AI model to be used as base for model to be updated/added
- Compiled model ID to be allocated (updated/added)
- Performance information (for example, expected value of loss function for pre/post-updated model)

The base station that has received the MCR may transmit a model change indication to the UE. The model change indication may be referred to as a model change command (MCC).

The MCC may include information indicating at least one of the following:
- Acknowledgment (ACK) corresponding to model update/addition indicated by MCR
- Compiled model ID / global model ID related to AI model to be used as base for model to be updated/added
- Compiled model ID to be allocated (updated/added)

The acknowledgment may be referred to as confirmation.

Note that the UE may implicitly judge that PDCCH reception including a DCI format that schedules PUSCH transmission having the same HARQ process number as that of PUSCH transmission including an MCR and that has a toggled NDI field value is (reception of) an MCC for the MCR.

The UE compiles an AI model corresponding to a certain compiled model ID, based on an MCR and a corresponding MCC.

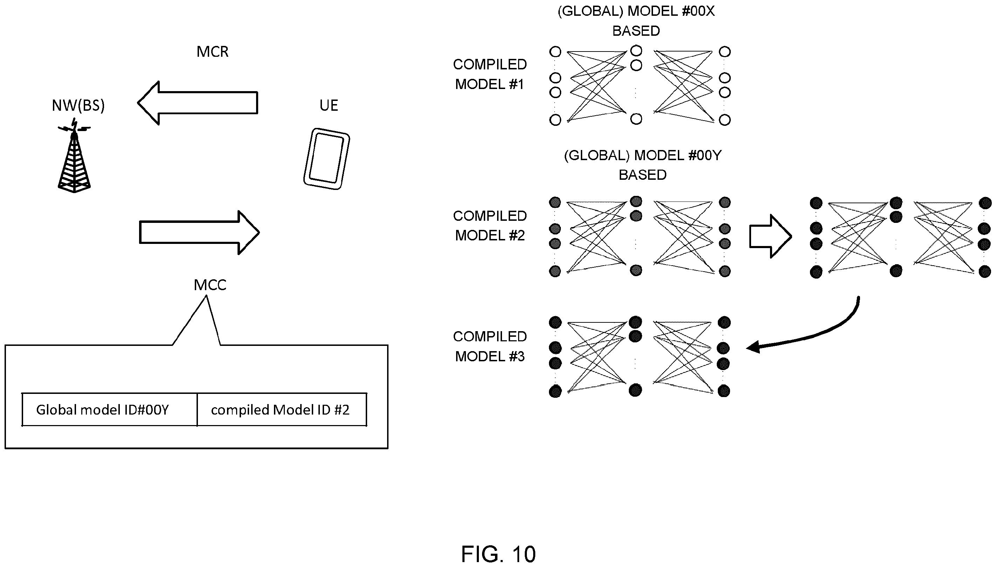

FIG. 10 is a diagram to illustrate an example of the compilation of the AI model in Embodiment 3.3. In the present example, assume that the UE has transmitted, to the base station, feasible AI model information indicating (global) models #00X and #00Y. The UE has compiled compiled model #1 and compiled model #2, based on model #00X and model #00Y, respectively.

In the present example, the UE transmits, based on compiled model #2, an MCR for addition of new compiled model #3. In response to reception of the MCR, the base station acknowledges the addition and transmits, to the UE, an MCC indicating that model #00Y and compiled model #2 correspond to each other.

The UE that has received the MCC compiles compiled model #3, based on model #00Y and compiled model #2.

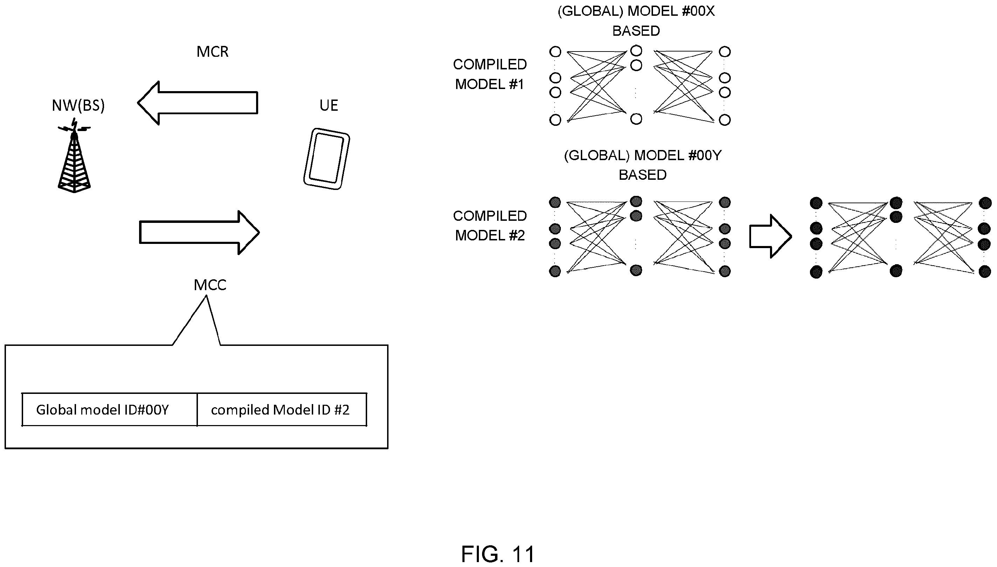

FIG. 11 is a diagram to illustrate an example of the compilation of the AI model in Embodiment 3.3. The present example is almost the same as FIG. 10, but differs from FIG. 10 in that the MCR is a request for update of compiled model #2. In response to reception of the MCR, the base station acknowledges the addition and transmits, to the UE, an MCC indicating that model #00Y and compiled model #2 correspond to each other.

The UE that has received the MCC updates and compiles compiled model #2, based on model #00Y.

### {Embodiment 3.4}

Embodiment 3.4 relates to a rule of allocation of a compiled model ID.

A compiled model ID may be allocated for each function (in other words, purpose, usage) of an AI model. For the compiled model ID, it may be assumed that the same ID for the same functions is absent. For the compiled model ID, it may be assumed that the same ID for different functions is present.

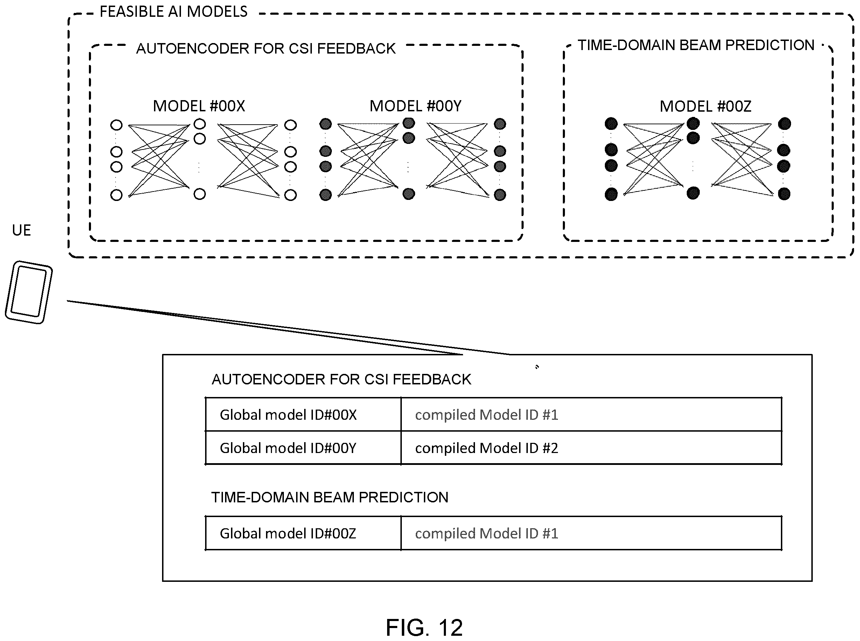

FIG. 12 is a diagram to illustrate an example of the allocation of the compiled model ID in Embodiment 3.4. In the present example, the UE is notified of models #00X, #00Y, and #00Z as feasible AI models, beforehand, from a data server. Note that a function of models #00X and #00Y is an autoencoder for CSI feedback, and a function of model #00Z is time-domain beam prediction.

The lower part of FIG. 12 illustrates an example of the compilation information described in Embodiment 3.1. The present example illustrates a case that, for the models for the autoencoder for CSI feedback, compiled model ID #1 and compiled model ID#2 correspond to global model ID #00X and global model ID #00Y, respectively. The present example also illustrates a case that, for the model for the time-domain beam prediction, compiled model ID #1 corresponds to global model ID #00Z.

In this manner, even same compiled model ID #1 may be associated with a different global model ID, depending on a function of a model.

According to the third embodiment described above, it is possible to appropriately control notification/update of a compiled model.

### <Fourth Embodiment>

A fourth embodiment relates to ID-based model management.

A UE may report, to a NW, performance information associated with a global/compiled model ID.

The performance information may include information on a value (for example, an expected value) of a loss function, or may include information on a gap between a value estimated by a model associated with the compiled model ID and an actual value.

For an autoencoder for CSI feedback, a performance metric may be generalized cosine similarity (GCS). For spatial/time-domain beam prediction, a performance metric may be difference between RSRPs/SINRs. For UE-based positioning using AI, a performance metric may be a positioning (location estimation) error.

The UE may receive/transmit information on a global/compiled model ID of a model to be applied. The UE may determine, based on the information, which model is to be applied.

The UE may receive/transmit performance feedback information associated with the global/compiled model ID. The UE may determine, based on the information, whether to train/update an AI model corresponding to a certain model ID.

According to the fourth embodiment described above, it is possible to appropriately perform ID-based model management.

### <Fifth Embodiment>

A fifth embodiment relates to a maximum number of compiled models.

A UE may report a (supported) maximum number of simultaneously compiled/configured/activated AI models. The number of activated AI models may mean the number of applied AI models.

The report of the maximum number may be performed for each component carrier (cell) or over all the component carriers. In other words, the maximum number may be a component carrier-dedicated value or a common value.

The report of the maximum number may be performed for each function of an AI model.

The UE may be configured with a maximum number of simultaneously compiled/configured/activated AI models.

The configuration of the maximum number may be performed for each component carrier (cell) or over all the component carriers. The configuration of the maximum number may be performed for each function of an AI model.

The UE may not expect that AI models exceeding the reported/configured maximum number are simultaneously compiled/configured/activated.

When AI models exceeding the reported/configured maximum number are simultaneously compiled/configured/activated, the UE may restore (or release) at least one compiled/configured/activated AI model to an uncompiled/unconfigured/deactivated state so that the number of simultaneously compiled/configured/activated AI models does not exceed the maximum number.

Note that the compiled model may be restored to an uncompiled state when certain time has elapsed since the compilation or when not having been used for certain time.

According to the fifth embodiment described above, it is possible to appropriately report/configure a maximum number of compiled models.

### <Supplement>

The above-described embodiments each describes a case where one model (global model / compiled model) is identified by a certain model ID (or a combination of a global model ID and a compiled model ID, the same applies hereinafter), but is not limited to this. In the above-described embodiments, a model ID may be used to identify one or more models (AI model sets). In other words, in the present disclosure, a model ID and an ID corresponding to an AI model set (model set ID) may be interchangeably interpreted.

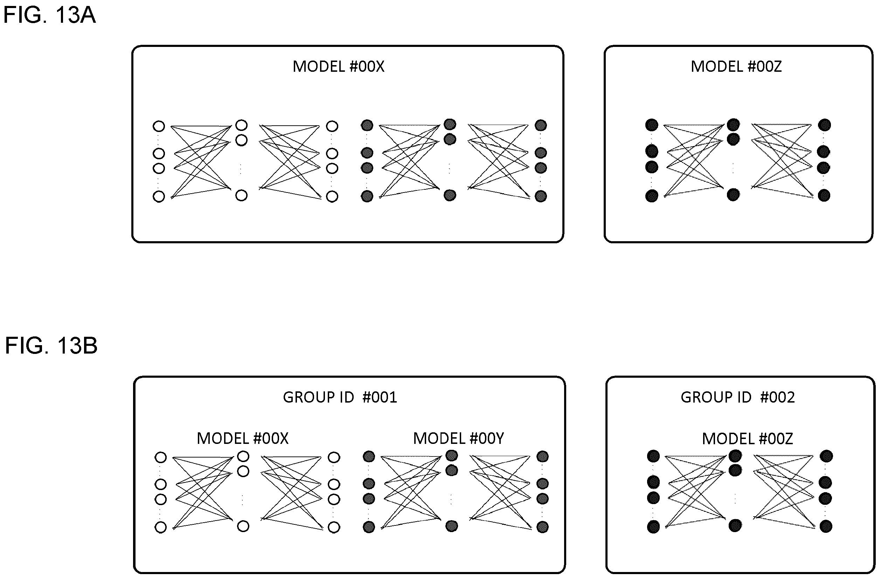

FIGS. 13A and 13B are diagrams to illustrate examples of the ID corresponding to the AI model set. As illustrated in FIG. 13A, an AI model set may be associated with one global model ID / compiled model ID. In FIG. 13A, model #00X and model #00Z are associated with two models and one model, respectively.

As illustrated in FIG. 13B, an AI model set indicated by a group ID may be associated with one or more global model IDs / compiled model IDs. In FIG. 13B, model #00X included in group ID #001, model #00Y included in group ID #001, and model #00Z included in group ID #002 are associated with different respective models.

The above-described embodiments may be applied to AI model deployment in a UE and a BS.

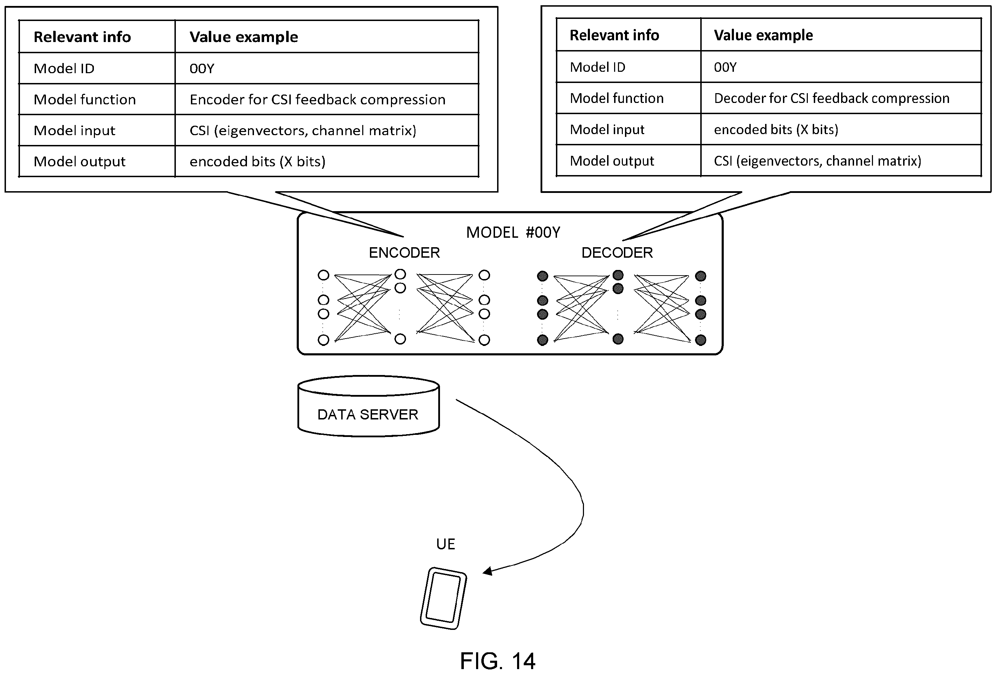

FIG. 14 is a diagram to illustrate an example in which an AI model used in the UE and an AI model used in the BS are used as an AI model set. In the present example, with model ID #00Y, an AI model with an encoder for CSI feedback compression and an AI model with a decoder for CSI feedback compression can be identified. For example, the encoder and the decoder are used in the UE and the BS, respectively. When AI model #00Y is indicated/compiled, the UE/BS can recognize a model used by a partner.

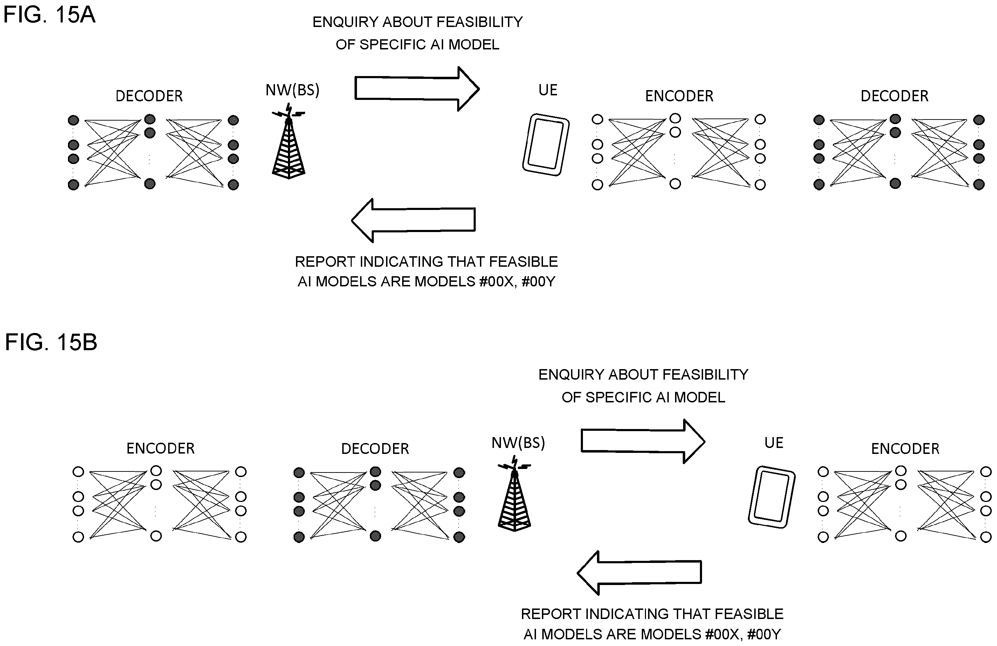

FIGS. 15A and 15B are diagrams to illustrate examples of evaluation of performance of the model in FIG. 14. In the present example, assume that models #00X and #00Y indicate the autoencoder model for CSI feedback in FIG. 14.

FIG. 15A illustrates an example in which the UE monitors model performance. By using the encoder and the decoder identified by AI model information, the UE can evaluate the performance in a case where CSI feedback transmitted by the UE using the encoder is decoded in the BS by using the decoder. In the present example, the UE may receive, from the BS, a report request for a report of all the feasible AI models, and may transmit, as feasible AI model information, a report indicating that feasible AI models are models #00X and #00Y and performance information corresponding to the respective models. The BS may determine, based on the performance information, an AI model to be compiled by the UE.

FIG. 15B illustrates an example in which the BS monitors model performance. By using the encoder and the decoder identified by AI model information, the BS can evaluate the performance in a case where CSI feedback transmitted by the UE using the encoder is decoded in the BS by using the decoder. In the present example, the UE may receive, from the BS, a report request for a report of all the feasible AI models, and may transmit, as feasible AI model information, a report indicating that feasible AI models are models #00X and #00Y. The BS may acquire performance information corresponding to models #00X and #00Y, and may determine, based on the performance information, an AI model to be compiled by the UE.

In the present disclosure, a model ID and a meta information ID may be interchangeably interpreted. As described above, meta information (or meta information ID) may be associated with information related to a beam (beam configuration). For example, the meta information (or meta information ID) may be used by the UE to select an AI model in consideration of which beam is used by the BS, or may be used to notify which beam is to be used by the BS to apply an AI model deployed by the UE. Note that, in the present disclosure, the meta information ID and an ID corresponding to a meta information set (meta information set ID) may be interchangeably interpreted.

Notification of any information (from a NW) to the UE in the above-described embodiment (in other words, reception, in the UE, of any information from the base station) may be performed by using physical layer signaling (for example, DCI), higher layer signaling (for example, RRC signaling, a MAC CE), a specific signal/channel (for example, a PDCCH, a PDSCH, a reference signal), or combinations or these.

When the notification is performed by the MAC CE, the MAC CE may be identified by inclusion, in a MAC sub-header, of a new logical channel ID (LCID) not defined in an existing specification.

When the notification is performed by the DCI, the notification may be performed by a specific field of the DCI, a radio network temporary identifier (RNTI) used for scrambling of cyclic redundancy check (CRC) bits given to the DCI, a format of the DCI, or the like.

The notification of any information to the UE in the above-described embodiment may be performed periodically, semi-persistently, or aperiodically.

Notification of any information from the UE (to the NW) in the above-described embodiment (in other words, transmission, in the UE, of any information to the base station) may be performed by using physical layer signaling (for example, UCI), higher layer signaling (for example, RRC signaling, a MAC CE), a specific signal/channel (for example, a PUCCH, a PUSCH, a reference signal), or combinations or these.

When the notification is performed by the MAC CE, the MAC CE may be identified by inclusion, in a MAC sub-header, of a new LCID not defined in an existing specification.

When the notification is performed by the UCI, the notification may be transmitted by using a PUCCH or a PUSCH.

The notification of any information from the UE in the above-described embodiment may be performed periodically, semi-persistently, or aperiodically.

In the above-described embodiments, an encoder/decoder may be interpreted as an AI model deployed in a UE / base station, and vice versa. In other words, the present disclosure is not limited to a case where an autoencoder is used, and may be applied when inference is performed by using any model. In the present disclosure, a target to be compressed by the UE / base station using an encoder is not limited to CSI (or channel/precoding matrix), and may be any information.

At least one of the above-described embodiments may be applied only to the UE that has reported a specific UE capability or that supports the specific UE capability.

The specific UE capability may indicate at least one of the following:
- Support of specific processing/operation/control/information for at least one of embodiments above
- Maximum FLOPs for AI model capable of being deployed by UE
- Maximum number of parameters for AI model capable of being deployed by UE
- Layer/algorithm/function supported by UE
- Calculation capability
- Data collection capability

The specific UE capability may be capability applied over all the frequencies (commonly irrespective of frequency), capability per frequency (for example, one or combinations of a cell, a band, a BWP, a band combination, a component carrier, and the like), capability per frequency range (for example, Frequency Range 1 (FR1), FR2, FR3, FR4, FR5, FR2-1, FR2-2), or capability per subcarrier spacing (SCS).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when specific information related to the above-described embodiment is configured for the UE by higher layer signaling. For example, the specific information may be information indicating enabling of use of an AI model, any RRC parameter for specific release (for example, Rel. 18), or the like.

When not supporting at least one of the specific UE capabilities or not configured with the specific information, the UE may apply operation of Rel. 15/16, for example.

Note that at least one of the above-described embodiments may be used for (compression of) UE-to-base station information communication other than CSI feedback. For example, the UE may report, to a NW, information related to a location (or positioning) / information related to location estimation in a location management function (LMF) in accordance with at least one of the above-described embodiments (for example, the UE may generate the information by using an encoder). The information may be information on channel impulse response (CIR) for each subband / antenna port. Reporting this information enables the base station to estimate a location of the UE without reporting a difference between angles/times of received signals.

### (Supplementary Note)

Regarding one embodiment of the present disclosure, the following supplementary notes of the invention will be given.

### {Supplementary Note 1}

A terminal including:
a transmitting section that transmits information related to an identifier (ID) of a feasible artificial intelligence (AI) model; and
a control section that compiles an AI model corresponding to the ID of the feasible AI model.

### {Supplementary Note 2}

The terminal according to supplementary note 1, wherein
the receiving section receives compilation information related to an ID of an AI model to be compiled, and
the control section compiles the AI model corresponding to the ID.

### {Supplementary Note 3}

The terminal according to supplementary note 1 or 2, wherein
the receiving section receives compilation information related to two IDs for identifying an AI model to be compiled, and
the control section compiles the AI model corresponding to the two IDs.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

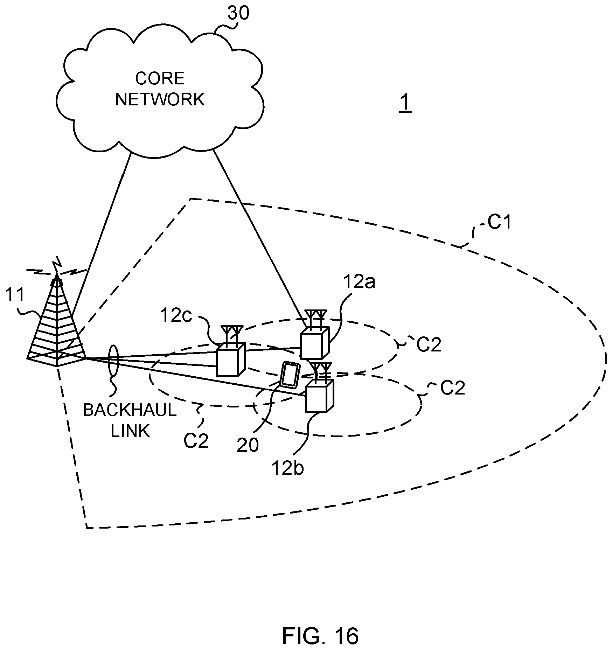

FIG. 16 is a diagram to illustrate an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect illustrated in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

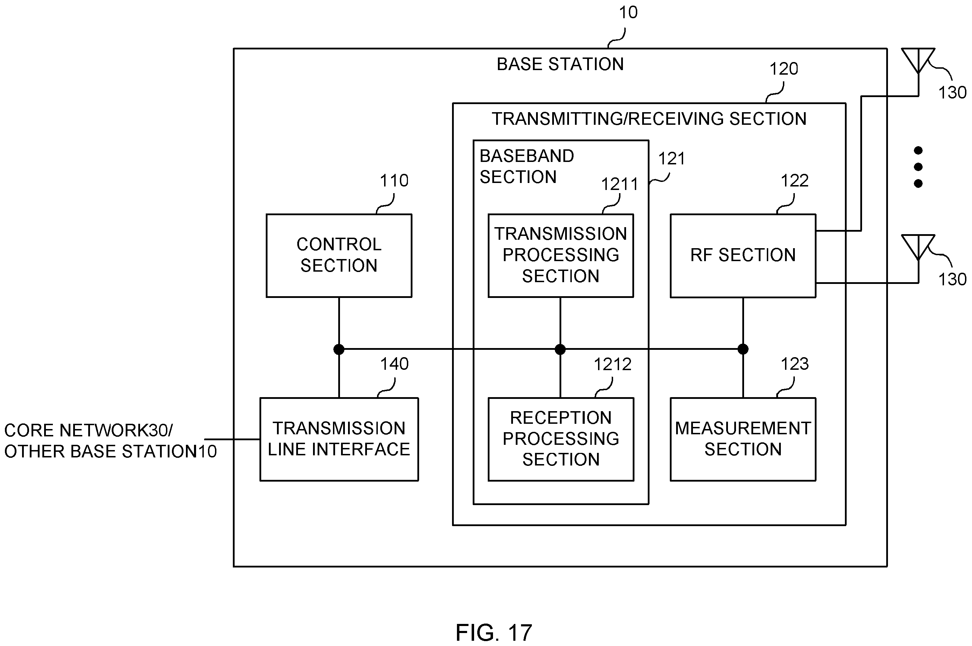

FIG. 17 is a diagram to illustrate an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily illustrates functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may receive information related to an identifier (ID) of a feasible artificial intelligence (AI) model. The transmitting/receiving section 120 may transmit information for compiling an AI model corresponding to the ID of the feasible AI model.

### (User Terminal)

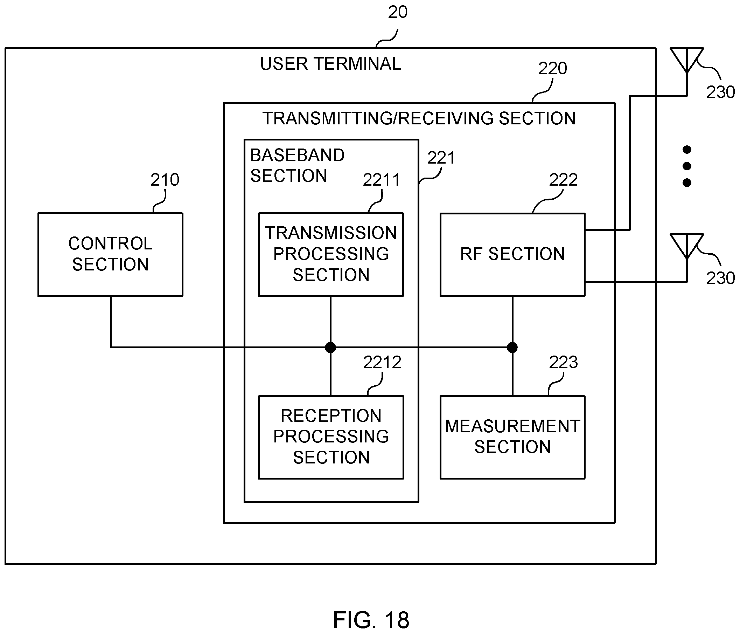

FIG. 18 is a diagram to illustrate an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily illustrates functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may transmit information related to an identifier (ID) of a feasible artificial intelligence (AI) model. The control section 210 may compile an AI model corresponding to the ID of the feasible AI model.

The transmitting/receiving section 220 may receive compilation information related to an ID of an AI model to be compiled, and the control section 210 may compile the AI model corresponding to the ID.

The transmitting/receiving section 220 may receive compilation information related to two IDs for identifying an AI model to be compiled, and the control section 210 may compile the AI model corresponding to the two IDs.

### (Hardware Structure)

Note that the block diagrams that have been used to describe the above embodiments illustrate blocks in functional units. These functional blocks (components) may be implemented in arbitrary combinations of at least one of hardware and software. Also, the method for implementing each functional block is not particularly limited. That is, each functional block may be realized by one apparatus that is physically or logically coupled, or may be realized by directly or indirectly connecting two or more physically or logically separate apparatuses (for example, via wire, wireless, or the like) and using these plurality of apparatuses. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

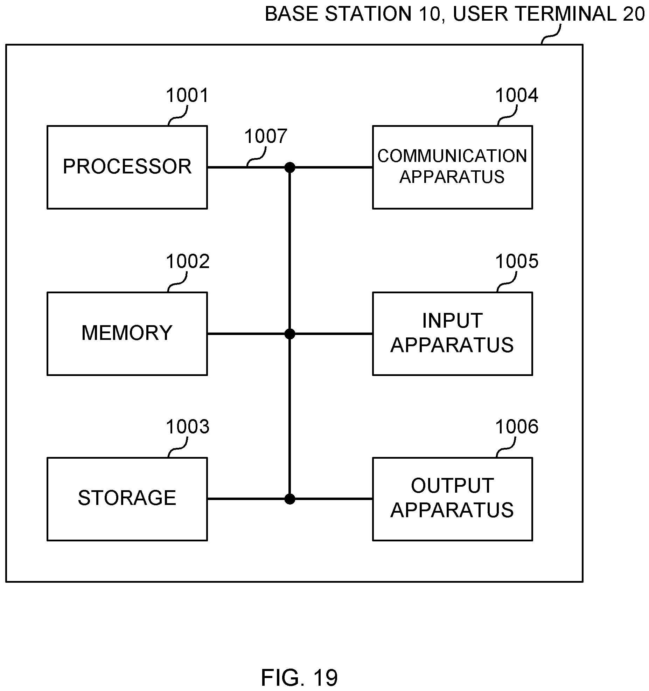

For example, a base station, a user terminal, and so on according to one embodiment of the present disclosure may function as a computer that executes the processes of the radio communication method of the present disclosure. FIG. 19 is a diagram to illustrate an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses illustrated in the drawings, or may be configured not to include part of apparatuses.

For example, although only one processor 1001 is illustrated, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these items of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTls are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, a case that a base station transmits information to a terminal and a case that the base station indicates, for the terminal, control/operation based on the information may be interchangeably interpreted.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

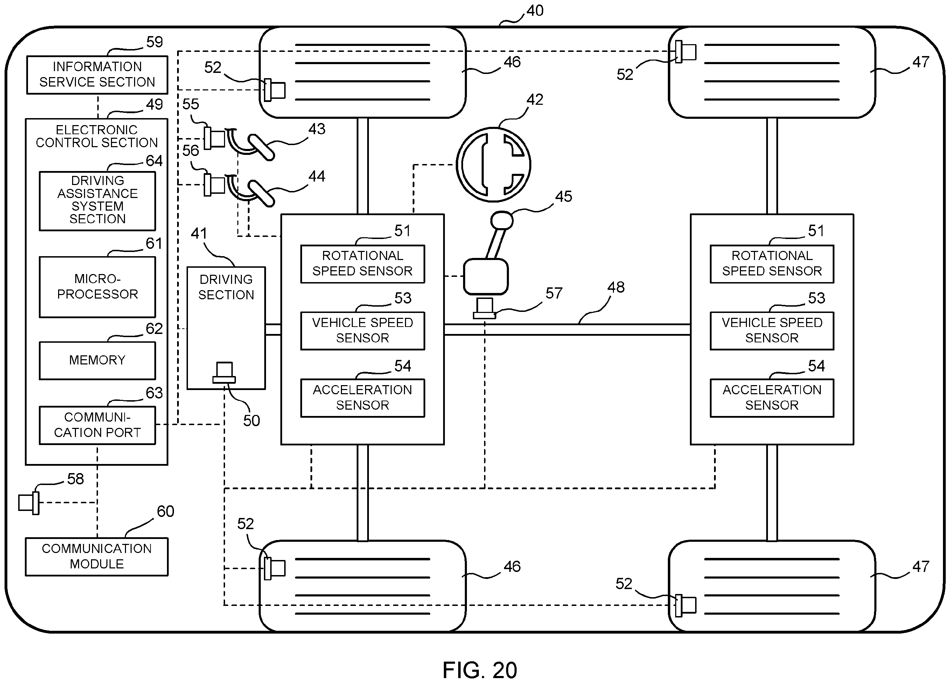

FIG. 20 is a diagram to illustrate an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various information such as drive information, traffic information, and entertainment information, such as a car navigation system, an audio system, a speaker, a display, a television, and a radio, and one or more ECUs that control these devices. The information service section 59 provides various information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an Al processor, and one or more ECUs that control these devices. The driving assistance system section 64 transmits and receives various information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various information (traffic information, signal information, inter-vehicle distance information, and the like) transmitted from the external apparatus, and displays the various information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various information received from the external apparatus in the memory 62 that can be used by the microprocessor 61. Based on the information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or smaller than," "smaller than," "equal to or larger than," "larger than," "equal to," and the like may be interchangeably interpreted. In the present disclosure, words such as "good," "poor," "large," "small," "high," "low," "early," "late," and the like may be interchangeably interpreted (irrespective of positive degree, comparative degree, and superlative degree). In the present disclosure, words such as "good," "poor," "large," "small," "high," "low," "early," "late," and the like may be interpreted as expressions obtained by adding "i-th" to the words, and vice versa (irrespective of positive degree, comparative degree, and superlative degree) (for example, "highest" may be interpreted as "i-th highest," and vice versa).

In the present disclosure, "of," "for," "regarding," "related to," "associated with," and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a transmitting section that transmits information related to an identifier (ID) of a feasible artificial intelligence (AI) model; and
a control section that compiles an AI model corresponding to the ID of the feasible AI model.

2. The terminal according to claim 1, wherein
the receiving section receives compilation information related to an ID of an AI model to be compiled, and
the control section compiles the AI model corresponding to the ID.

3. The terminal according to claim 1, wherein
the receiving section receives compilation information related to two IDs for identifying an AI model to be compiled, and
the control section compiles the AI model corresponding to the two IDs.

4. A radio communication method for a terminal, the radio communication method comprising:
transmitting information related to an identifier (ID) of a feasible artificial intelligence (AI) model; and
compiling an AI model corresponding to the ID of the feasible AI model.

5. A base station comprising:
a receiving section that receives information related to an identifier (ID) of a feasible artificial intelligence (AI) model; and
a transmitting section that transmits information for compiling an AI model corresponding to the ID of the feasible AI model.
